# EUROPÄISCHE PATENTSCHRIFT

(11) **EP 3 664 980 B1**
(45) Veröffentlichungstag und Bekanntmachung des Hinweises auf die Patenterteilung: **20.07.2022**
(21) Anmeldenummer: 18748935.6
(22) Anmeldetag: 08.08.2018
(51) Int. Cl.: B28C 5/12, B28B 1/00, B29C 64/106, C04B 28/04, C04B 28/06

(54) **VERFAHREN FÜR DEN 3D-DRUCK VON MINERALISCHEN BINDEMITTELZUSAMMENSETZUNGEN**
METHOD FOR 3D PRINTING OF MINERAL BINDER COMPOSITIONS
PROCÉDÉ D'IMPRESSION EN 3D DE COMPOSITIONS DE LIANT MINÉRALES

(30) Priorität: 09.08.2017 EP 17185654
(43) Veröffentlichungstag der Anmeldung: 17.06.2020
(60) Teilanmeldung: 22174371.9
(73) Patentinhaber: Sika Technology AG, 6340 Baar (CH)
(72) Erfinder: LIARD, Maxime, 8050 Zürich (CH); LOOTENS, Didier, 8700 Küsnacht (CH); SCHUMACHER, Marc, 8610 Uster (CH)
(74) Vertreter: Sika Patent Attorneys
(86) Internationale Anmeldenummer: PCT/EP2018/071451
(87) Internationale Veröffentlichungsnummer: WO 2019/030255

(56) Entgegenhaltungen:
- CN-A- 106 988 535
- CN-U- 204 354 263
- DE-A1- 2 947 913
- JP-A- H0 262 205
- JP-B2- 3 080 627

## Beschreibung

### Technisches Gebiet

Die Erfindung betrifft ein Verfahren für den 3D-Druck von mineralischen Bindemittelzusammensetzungen sowie damit hergestellte Formkörper.

### Stand der Technik

Konstruktionsbeton wird üblicherweise zur Formgebung in Schalungen gegossen und darin aushärten gelassen. Die Fertigung der Schalung verursacht Materialkosten und benötigt Zeit, die Formgebung ist beschränkt und Schalungen werden oft mit umweltbelastenden Schalölen behandelt.

Das Problem der hohen Kosten und beschränkter Formgebung bei der Verwendung von Schalungen wurde beispielsweise bei thermoplastischen Kunststoffen durch den Einsatz von 3D-Druckverfahren teilweise gelöst.

Das 3D-Druckverfahren wird auch als Freiform-Konstruktion bezeichnet. Typische Materialien für den 3D-Druck sind thermoplastische Kunststoffe, die erhitzt und im plastischen Zustand punktweise oder schichtweise aufgetragen werden. Meist erfolgt der Materialauftrag über einen beweglichen Druckkopf der von einem Computer gesteuert wird. Die Polymere erlangen durch Abkühlen genügend Festigkeit um die gegebene Form zu halten.

Der 3D-Druck von Baustoffen, speziell von zementösen Materialien, ist aber deutlich schwieriger. Zement erreicht seine Festigkeit durch Reaktion mit Wasser in einem chemisch ablaufenden Prozess, der Zementhydratation. Typischerweise liegt der Zeitraum von Mischen des Zementes mit Wasser und dem Erreichen von genügender Festigkeit um selbsttragend zu sein im Bereich von mehreren Stunden. Der 3D-Druck erfordert aber eine rasche Festigkeitsentwicklung oder zumindest eine gute Formstabilität des aufgetragenen Materials.

Einige Anwender setzten daher Beton- oder Mörtelmischungen ein, die sehr wenig Wasser enthalten und daher sehr steif sind. Solche Mischungen lassen sich nur über kurze Strecken und mit hohem Pumpendruck fördern und der so hergestellte Formkörper enthält oft Fehlstellen, wie beispielsweise Lufteinschlüsse, ist optisch inhomogen und/oder weist einen schlechten Verbund zwischen den einzelnen aufgetragenen Schichten auf.

Ein weiteres Problem ist der Transport der Mörtel- oder Betonmischung zu der Druckeinrichtung, speziell für den Druck von grösseren Strukturen. Nur gut förderbare Mischungen können über eine grosse Strecke von dem Mischer zum Druckkopf gefördert werden. Solche Mischungen sind aber typischerweise nicht selbsttragend und sind so daher für den Druck nicht geeignet.

CN 203357623 beschreibt ein Verfahren, bei dem kurz vor dem Auftragen des Betons diesem durch Vakuum ein Teil des Wassers entzogen wird um ein steifes, selbsttragendes Material zu erhalten. Solche Installationen sind teuer, aufwendig und erhöhen das Gewicht des Druckkopfes in unerwünschter Weise, das so erhaltene Material ist oft nicht homogen, was einerseits zu optischen Mängeln aber auch zu Rissbildung führen kann.

WO 2013/064826 beschreibt ein Verfahren zum schichtweisen Applizieren eines zementösen Materials. Es wird die Zugabe eines Beschleunigers beschrieben, welche über einen separaten Einlass der in der Nähe der Düse mit der das zementöse Material ausgetragen wird angebracht ist, erfolgt, ohne Verwendung einer Mischeinrichtung zum Vermischen des Beschleunigers mit dem zementösen Material. Die beschriebene Anordnung ist nicht geeignet, das zementöse Material mit dem Beschleuniger effektiv zu mischen.

CN 104310918 beschreibt eine zementöse Mischung für den 3D-Druck wobei eine Vormischung aus Beschleuniger und Verzögerer hergestellt wird und diese dann der zementösen Trockenmischung zugegeben wird, bevor mit Wasser gemischt wird. Zementöse Mischungen, die beim Anmachen mit Wasser bereits den Beschleuniger enthalten, sind, auch wenn sie einen Verzögerer enthalten, sehr schwer in ihrem Aushärteverhalten steuerbar.

JP H02 62205 A beschreibt eine Vorrichtung zum kontinuierlichen Rühren, Mischen und Austragen eines hydraulischen Materials welches mit einem Beschleuniger vermischt wird. Das Ausgetragene Material wird in eine fixe oder bewegliche Schalung eingefüllt.

DE 29 47 913 A1 beschreibt eine Maschine für das Spritzen von Nassbeton. Hierbei wird ein trockener Beton gefördert und die Zugabe und das Einmischen von Wasser und Zusatzmittel, wie Erstarrungsbeschleuniger, erfolgt erst unmittelbar vor dem Spritzschlauch mit Spritzdüse. Der Beton wird mittels Druckluft aus der Spritzdüse gefördert und an die zu beschichtende Wand gespritzt.

JP 3 080627 B2 beschreibt eine Vorrichtung für das kontinuierliche Mischen von Aggregaten, Härter und Harz. Hierbei wird zuerst der Härter mit den Aggregaten vermischt und anschliessend das Harz zugemischt.

CN 106 988 535 A beschreibt einen 3D Druckkopf, in dem Druckmaterial und Additiv gemischt werden.

CN 204 354 263 U beschreibt eine Vorrichtung zum Mischen und Extrudieren von mehrkomponentigen Bingham-Flüssigkeiten.

Die bisherigen Verfahren lösen das Problem nicht zufriedenstellend, die Fertigungsgeschwindigkeit ist gering, die Produktionskosten hoch, der optische Aspekt ist mangelhaft und/oder die Festigkeit des Formkörpers ist ungenügend.

Es besteht deshalb Bedarf nach verbesserten Verfahren für den 3D-Druck von mineralischen Bindemittelzusammensetzungen, welche die vorstehend genannten Nachteile möglichst überwinden.

### Darstellung der Erfindung

Aufgabe der vorliegenden Erfindung ist es daher, ein verbessertes Verfahren für den 3D-Druck von mineralischen Bindemittelzusammensetzungen zur Verfügung zu stellen. Das Verfahren soll insbesondere eine effiziente, zuverlässige und möglichst rasche Applikation der mineralischen Bindemittelzusammensetzung ermöglichen. Dies nach Möglichkeit bei hoher Qualität der aufgetragenen Schichten bezüglich Festigkeitsentwicklung und optischer Einheitlichkeit.

Überraschenderweise wird diese Aufgabe durch ein Verfahren, wie in Anspruch 1 beschrieben, gelöst.

Die Trennung der Schritte "Bereitstellung der wasserhaltigen mineralischen Bindemittelzusammensetzung" und "Vermischen des wässrigen Beschleunigers mit der wasserhaltigen Bindemittelzusammensetzung" bewirkt eine starke Flexibilisierung des Verfahrens. Die wasserhaltige mineralische Bindemittelzusammensetzung bleibt über einen längeren Zeitraum gut verarbeitbar, weil der wässrige Beschleuniger erst mit dem kontinuierlichen Mischer eingemischt wird. Ein hoher Druck in der Fördereinrichtung, insbesondere in einem Schlauch, zwischen Pumpe und kontinuierlichem Mischer, wird dadurch vermieden sowie ein zu frühes Ansteifen oder Härten der Bindemittelzusammensetzung und damit eine mögliche Blockierung der Druckeinrichtung, speziell bei ungeplanten Wartezeiten.

Weiters können der Ort der Bereitstellung der wasserhaltigen Bindemittelzusammensetzung und der Ort der Applikation räumlich getrennt sein, was wegen der oft engen Platzverhältnisse an der Druckstelle vorteilhaft ist.

Durch die Verwendung des kontinuierlichen Mischers mit mindestens einem dynamischen Mischelement wird der wässrige Beschleuniger mit der wasserhaltigen Bindemittelzusammensetzung sehr gut und effektiv vermischt, wodurch die aufgetragenen Schichten einheitlich und rasch aushärten.

Überraschenderweise ist der Materialaustrag aus dem kontinuierlichen Mischer sehr konstant, und dies, auch wenn die Pumpleistung beim Fördern der wasserhaltigen mineralischen Bindemittelzusammensetzung zu dem Mischer Schwankungen unterliegt, was bei normalen Beton- oder Mörtelpumpen oft der Fall ist.

Auch die Qualität der aus dem Mischer austretenden beschleunigten mineralischen Bindemittelzusammensetzung ist sehr konstant, auch wenn die Qualität der wasserhaltigen mineralischen Bindemittelzusammensetzung Schwankungen aufweist. Diese Schwankungen können von Qualitätsschwankungen, speziell in der Partikelgrössenverteilung der Füllstoffe oder Schwankungen in der Zusammensetzung des mineralischen Bindemittels und/oder leichten Abweichungen in der Dosierung der Bestandteile, herrühren. Weiterhin ist die beschleunigte Bindemittelzusammensetzung nach dem kontinuierlichen Mischer ohne grobe Lufteinschlüsse und sehr homogen, und die Form der aufgetragenen Schichten ist sehr gleichmässig und optisch ansprechend ohne Fehlstellen.

Durch das Verfahren kann die beschleunigte Bindemittelzusammensetzung in zuverlässiger Art und Weise rasch und in homogenen Schichten aufgetragen werden, wodurch grosse Formkörper einfach, mit minimalem Zeitaufwand und ästhetisch ansprechend hergestellt werden können.

Besonders bevorzugte Ausführungsformen der Erfindung sind Gegenstand der abhängigen Ansprüche.

### Wege zur Ausführung der Erfindung

Gegenstand der Erfindung ist ein Verfahren zur Applikation einer mineralischen Bindemittelzusammensetzung mittels 3D-Druck, umfassend die Schritte:
- Bereitstellen einer wasserhaltigen mineralischen Bindemittelzusammensetzung,
- Zuführen der wasserhaltigen mineralischen Bindemittelzusammensetzung, insbesondere mittels einer Pumpe, zu einem kontinuierlichen Mischer umfassend
   - einen Mischbereich mit mindestens einem dynamischen Mischelement und mindestens einem Einlass,
   - einen mit dem Mischbereich verbundenen Förderbereich mit mindestens einer Fördervorrichtung und einem Auslass,
   wobei die wasserhaltige mineralische Bindemittelzusammensetzung durch den mindestens einen Einlass in den Mischbereich gefördert wird,
- Zuführen von mindestens einem wässrigen Beschleuniger für das Abbinden der wasserhaltigen mineralischen Bindemittelzusammensetzung in den Mischbereich des kontinuierlichen Mischers,
- Vermischen des mindestens einen wässrigen Beschleunigers mit der wasserhaltigen Bindemittelzusammensetzung im Mischbereich des kontinuierlichen Mischers zu einer beschleunigten Bindemittelzusammensetzung,
- Fördern der beschleunigten Bindemittelzusammensetzung mittels der Fördervorrichtung zum Auslass, und
- schichtweises Applizieren der beschleunigten Bindemittelzusammensetzung, insbesondere über einen beweglichen Druckkopf,
wobei der wässrige Beschleuniger mindestens eine Verbindung ausgewählt aus der Gruppe bestehend aus Aminoalkoholen, Alkali- und Erdalkalinitraten, Alkali- und Erdalkalinitriten, Alkali- und Erdalkalithiocyanaten, Alkali- und Erdalkalihalogeniden, Alkali- und Erdalkalikarbonaten, Glyzerin, Glyzerinderivaten, Glykolen, Glykolderivaten, Aluminiumsalzen, Aluminiumhydroxiden, Alkali- und Erdalkalihydroxiden, Alkali- und Erdalkalisilikaten, Alkali- und Erdalkalioxiden, Kristallisationskeimen, insbesondere CalciumSilikat-Hydrat-Verbindungen in feinteiliger Form, und Mischungen davon enthält

Der 3D-Druck ist ein schalungsfreies formgebendes Verfahren. Das Material wird Schicht für Schicht aufgetragen und so dreidimensionale Gegenstände erzeugt. Dabei erfolgt der schichtweise Aufbau computergesteuert aus einem oder mehreren flüssigen oder festen Werkstoffen nach vorgegebenen Massen und Formen.

Unter "3D-Druck" auch als "Freiform-Konstruktion" bezeichnet, versteht man im vorliegenden Dokument ein Verfahren zur Herstellung von Formkörpern, bei dem ein verformbares Material in mehreren Schichten oder kleineren Portionen aufgebracht wird, und nach dem Aushärten einen festen Formkörper bildet. Das Aufbringen der Schichten erfolgt hierbei nicht durch Versprühen.

Unter "mineralisches Bindemittel" versteht man im vorliegenden Dokument insbesondere ein Bindemittel, welches in Anwesenheit von Wasser in einer Hydratationsreaktion zu festen Hydraten oder Hydratphasen reagiert.

Unter "mineralische Bindemittelzusammensetzung" versteht man im vorliegenden Dokument entsprechend eine Zusammensetzung enthaltend mindestens ein mineralisches Bindemittel. Diese enthält insbesondere das Bindemittel, Füllstoffe und optional eines oder mehrere Zusatzmittel.

Unter "wasserhaltige mineralische Bindemittelzusammensetzung" versteht man im vorliegenden Dokument eine mit Wasser gemischte mineralische Bindemittelzusammensetzung, insbesondere in fluider Form.

Unter "zementöses Bindemittel" wird im vorliegenden Dokument insbesondere ein Bindemittel mit einem Anteil von wenigstens 5 Gewichts-%, insbesondere wenigstens 20 Gewichts-%, bevorzugt wenigstens 35 Gewichts-%, im Speziellen wenigstens 65 Gewichts-%, bei einem maximalen Gehalt von 100 Gewichts-%, Zementklinker verstanden. Der Zementklinker umfasst bevorzugt einen Portlandzementklinker, einen Calciumaluminatklinker oder einen Calciumsulfoaluminatklinker. Mit Zementklinker ist im vorliegenden Dokument insbesondere gemahlener Zementklinker gemeint.

Unter "Mörtel" oder "Beton" werden im vorliegenden Dokument wässrige Dispersionen verstanden, die mindestens einen Zement und mindestens einen mineralischen Füllstoff enthalten und die fähig sind, nach der Hydratation des Zementes in einer festen Form auszuhärten. Unter "Mörtel" werden hierbei Dispersionen, die Füllstoffe mit Partikelgrössen bis maximal etwa 8 mm, und unter "Beton" Dispersionen, die auch Füllstoffe mit Partikelgrössen über 8 mm enthalten, verstanden.

Unter "Frischmörtel" oder "Frischbeton" wird im vorliegenden Dokument ein Mörtel oder Beton unmittelbar nach dem Vermischen der Bestandteile mit Wasser verstanden.

Unter "selbsttragend" wird im vorliegenden Dokument eine Materialeigenschaft verstanden, bei der das Material nach der Formgebung die einzelnen Dimensionen um maximal 10% verändert, sofern keine äussere Kraft einwirkt. Das bedeutet, dass ein extrudierter Strang mit quadratischem Querschnitt und einer Seitenlänge von 10 mm nach dem Härten eine Höhe von 9 bis 10 mm und eine Breite von 10 bis 11 mm aufweist.

Unter "dynamisches Mischelement" wird im vorliegenden Dokument ein Bauteil verstanden, das bewegbare Elemente umfasst und geeignet ist, feste und/oder flüssige Bestandteile zu vermischen.

Bei dem Verfahren wird eine wasserhaltige mineralische Bindemittelzusammensetzung bereitgestellt. Diese enthält mindestens ein mineralisches Bindemittel. Ein geeignetes mineralisches Bindemittel ist insbesondere ein mineralisches Bindemittel, welches in Anwesenheit von Wasser in einer Hydratationsreaktion zu festen Hydraten oder Hydratphasen reagiert. Dies kann insbesondere ein hydraulisches Bindemittel, welches mit Wasser auch unter Wasser erhärtbar ist, wie insbesondere Zement oder hydraulischer Kalk, oder ein latent hydraulisches Bindemittel, welches unter dem Einwirken von Zusätzen mit Wasser abbindet, wie insbesondere Schlacke, oder ein puzzolanisches Bindemittel, wie insbesondere Flugasche, oder ein nicht hydraulisches Bindemittel, wie insbesondere Gips in Form von Anhydrit oder Halbhydrat-Gips, sein. Bevorzugt ist das mineralische Bindemittel ausgewählt aus der Gruppe bestehend aus Zement, Gips, gebrannter Kalk, Schlacke und Flugasche und Mischungen davon.

Bevorzugt umfasst die mineralische Bindemittelzusammensetzung mindestens ein hydraulisches Bindemittel, bevorzugt ein zementöses Bindemittel. Bevorzugt ist das hydraulische Bindemittel ausgewählt aus der Gruppe bestehend aus Portlandzement, Calciumaluminatzement, Calciumsulfoaluminatzement und Mischungen davon.

Als Zement kann jeder verfügbare Zementtyp oder eine Mischung von zwei oder mehreren Zementtypen verwendet werden, beispielsweise die unter der DIN EN 197-1 klassifizierten Zemente: Portlandzement (CEM I), Portlandkompositzement (CEM II), Hochofenschlackezement (CEM III), Pozzolanischer Zement (CEM IV) und Kompositzement (CEM V). Selbstverständlich sind Zemente, die gemäß einem alternativen Standard, wie beispielsweise dem ASTM-Standard oder dem indischen Standard, produziert werden, gleichermassen geeignet.

Besonders bevorzugt ist ein Zement gemäss DIN EN 197-1, ein Calciumsulfoaluminatzement, ein Calciumaluminatzement, oder Mischungen davon, gegebenenfalls in einer Mischung mit Calciumsulfat.

Am meisten bevorzugt ist Portlandzement oder ein Zement enthaltend Portlandzement gemäss DIN EN 197-1. Portlandzement ist besonders einfach verfügbar und ermöglicht Mörtel mit guten Eigenschaften.

Speziell geeignet sind auch Mischungen aus Zement, Calciumaluminatzement und Calciumsulfat oder Mischungen aus Zement und Calciumsulfoaluminatzement. Solche Bindemittelmischungen ermöglichen kurze Abbindezeiten und hohe Frühfestigkeiten.

Bevorzugt ist ein Anteil des hydraulischen Bindemittels am gesamten mineralischen Bindemittel von wenigstens 5 Gewichts-%, insbesondere wenigstens 20 Gewichts-%, mehr bevorzugt wenigstens 35 Gewichts-%, im Speziellen wenigstens 65 Gewichts-% bei einem maximalen Anteil von 100 Gewichts-%. Gemäss einer weiteren vorteilhaften Ausführungsform besteht das mineralische Bindemittel zu 95 bis 100 Gewichts-% aus hydraulischem Bindemittel, insbesondere aus Zementklinker.

Es kann auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latent hydraulische und/oder puzzolanische Bindemittel sind insbesondere Schlacke, Hüttensand, Flugasche und/oder Silicafume.

Die mineralische Bindemittelzusammensetzung enthält bevorzugt weiterhin Füllstoffe, insbesondere mineralische Füllstoffe. Füllstoffe sind chemisch inerte feste partikuläre Materialien und werden in verschiedenen Formen, Grössen und als unterschiedliche Materialien angeboten, die von feinsten Sandpartikeln bis grossen groben Steinen variieren. Geeignet sind prinzipiell alle Füllstoffe die üblicherweise für Beton und Mörtel verwendet werden. Beispiele von besonders geeigneten Füllstoffen sind Gesteinskörnungen, Kies, Sand, insbesondere Quarzsand und Kalksteinsand, zerkleinerte Steine, kalzinierte Kiesel oder leichte Füllstoffe wie Blähton, Blähglas, Schaumglas, Bimsstein, Perlit und Vermiculit. Weitere vorteilhafte Füllstoffe sind Calciumcarbonat, Aluminiumoxid, amorphe Kieselsäure (Silicafume) oder kristalline Kieselsäure (Quarzmehl).

Die Partikelgrösse richtet sich nach der Anwendung und liegt im Bereich von 0.1 µm bis 32 mm und mehr. Bevorzugt werden unterschiedliche Partikelgrössen gemischt um die Eigenschaften der wasserhaltigen mineralischen Bindemittelzusammensetzung optimal einzustellen. Es können auch Füllstoffe aus unterschiedlichen Materialien gemischt werden. Die Partikelgrösse kann mit Hilfe einer Siebanalyse bestimmt werden.

Bevorzugt sind Füllstoffe mit Partikelgrössen von maximal 8 mm, mehr bevorzugt maximal 5 mm, noch mehr bevorzugt maximal 3.5 mm, am meisten bevorzugt maximal 2.2 mm.

Bevorzugt enthält die mineralische Bindemittelzusammensetzung Füllstoffe von denen mindestens 30 Gewichts-%, mehr bevorzugt mindestens 40 Gewichts-%, am meisten bevorzugt mindestens 50 Gewichts-%, kleiner als 2 mm, bevorzugt kleiner als 1 mm, mehr bevorzugt kleiner als 0.5 mm, sind, bezogen auf eine Gesamtmenge von 100 Gewichts-% aller Füllstoffe in der Bindemittelzusammensetzung.

Geeignete Füllstoffe mit kleiner Partikelgrösse sind insbesondere feine Quarzsande oder Calciumcarbonat-Pulver Bindemittelzusammensetzungen mit solchen Partikelgrössen sind gut förderbar, lassen sich in dem kontinuierlichen Mischer gut mit dem wässrigen Beschleuniger vermischen und ergeben nach der Applikation eine sehr homogene Oberfläche.

In speziellen Anwendungen können auch Füllstoffe mit Partikelgrössen bis 32 mm, mehr bevorzugt bis 20 mm, am meisten bevorzugt bis 16 mm verwendet werden.

Optional kann die wasserhaltige mineralische Bindemittelzusammensetzung wenigstens ein Additiv, beispielsweise ein Betonzusatzmittel und/oder ein Mörtelzusatzmittel und/oder Prozesschemikalien beinhalten. Das wenigstens eine Additiv umfasst insbesondere einen Entschäumer, ein Netzmittel, einen Farbstoff, ein Konservierungsmittel, ein Fliessmittel, einen Verzögerer, weitere Beschleuniger, ein Polymer, einen Luftporenbildner, ein Rheologiehilfsmittel, einen Viskositätsmodifizierer, ein Pumphilfsmittel, einen Schwindreduzierer oder einen Korrosionsinhibitor oder Kombinationen davon.

Die Verwendung eines Fliessmittels oder Verflüssigers in der wasserhaltigen mineralischen Bindemittelzusammensetzung verbessert die Fliessfähigkeit der Zusammensetzung. Als Fliessmittel kommen beispielsweise Lignosulfonate, sulfonierte Naphthalin-Formaldehyd-Kondensate, sulfonierte Melamin-Formaldehyd-Kondensate, sulfonierte Vinylcopolymere, Polyalkylenglykole mit Phosphonatgruppen, Polyalkylenglykole mit Phosphatgruppen, Polycarboxylate oder Polycarboxylatether, oder Mischungen der genannten Fliessmittel, in Frage, wobei unter Polycarboxylatethern Kammpolymere mit anionischen Gruppen am Polymer-Rückgrat und Polyalkylenoxid-Seitenketten, wobei die anionischen Gruppen im Besonderen ausgewählt sind aus Carboxylatgruppen, Sulfonatgruppen, Phosphonatgruppen oder Phosphatgruppen, verstanden werden.

Das Fliessmittel beinhaltet bevorzugt einen Polycarboxylatether. Insbesondere ist das Fliessmittel ein Kammpolymer umfassend ein Polycarboxylat-Rückgrat mit daran gebundenen Polyalkylenoxid-Seitenketten, insbesondere Polyethylenoxid-Seitenketten. Die Seitenketten sind dabei insbesondere über Ester-, Ether-, Imid- und/oder Amidgruppen an das Polycarboxylat-Rückgrat gebunden.

Entsprechende Kammpolymere werden auch von Sika Schweiz AG unter der Handelsnamenreihe Sika^{®} ViscoCrete^{®} kommerziell vertrieben.

Der Einsatz von Erhärtungsverzögerern kann vorteilhaft sein, da dadurch die Verarbeitungsdauer der wasserhaltigen Bindemittelzusammensetzung verlängert wird. Der Erhärtungsverzögerer ist bevorzugt eine Hydroxycarbonsäure, insbesondere Weinsäure, Zitronensäure oder Gluconsäure, ein Zucker, insbesondere Saccharose, ein Phosphat oder ein Phosphonat, oder deren Salze oder Mischungen davon.

Der Einsatz von Rheologiehilfsmitteln kann vorteilhaft sein, da dadurch der Zusammenhalt der Zusammensetzung verbessert werden kann. Bevorzugte Rheologiehilfsmittel sind natürliche oder modifizierte Polysaccharide, insbesondere Zelluloseether oder -ester, Stärke, modifizierte Stärke, Xanthan, Welan, Diutan oder Carraageen.

Insbesondere bevorzugt ist das Rheologiehilfsmittel Methylcellulose, Hydroxyethylcellulose, Methyl-Hydroxyethylcellulose oder Xanthan Gum, oder Mischungen davon.

Der Einsatz von Pumphilfsmitteln kann vorteilhaft sein, da der innere Zusammenhalt, die Geschmeidigkeit und die Gleitfähigkeit der Zusammensetzung verbessert werden. Bevorzugt enthält das Pumphilfsmittel wasserlösliche Polymere, wie insbesondere SikaPump^{®} von Sika.

In einer bevorzugten Ausführungsform enthält die Bindemittelzusammensetzung ein Polymer, insbesondere ein wasserunlösliches, filmbildendes Polymer. Filmbildende Polymere können, wenn sie als Dispersion in einer Flüssigkeit vorliegen, beim Trocknen der Dispersion zu Filmen koagulieren. Bevorzugt ist das Polymer ein Homo-oder Copolymer von Acrylestern, ein Copolymer von Styrol und Butadien, ein Copolymer von Styrol und Arcrylestern oder ein Homo- oder Copolymer von Vinylacetat.

Wässrige Dispersionen solcher Polymere sind kommerziell erhältlich, beispielsweise unter den Handelsnamen Acronal^{®} (BASF), Primal^{™} (DOW) oder Revacryl (Synthomer).

Es können aber auch redispergierbare Polymerpulver, die beim Vermischen mit Wasser Dispersionen bilden, eingesetzt werden. Solche Polymerpulver sind kommerziell erhältlich, beispielsweise unter den Handelsnamen Vinnapas^{®} (Wacker) oder Elotex^{®} (AkzoNobel).

Insbesondere umfasst die mineralische Bindemittelzusammensetzung eine hydraulische Bindemittelzusammensetzung, bevorzugt eine Mörtel- oder Betonzusammensetzung, oder sie besteht daraus.

Die wasserhaltige mineralische Bindemittelzusammensetzung wird bevorzugt durch Vermischen einer trockenen mineralischen Bindemittelzusammensetzung mit Wasser bereitgestellt. Das Wasser kann weiter noch Additive in gelöster oder dispergierter Form enthalten. Die Additive können aber auch nach der Zugabe des Wassers, als Feststoffe oder in gelöster Form, mit der wasserhaltigen mineralischen Bindemittelzusammensetzung vermischt werden.

Die Bereitstellung und Herstellung solcher Mischungen ist dem Fachmann von der Bereitstellung von Mörteln oder Betonmischungen bekannt.

Die Herstellung kann insbesondere in einem Batch-Mischer oder auch in einem kontinuierlichen Mischer erfolgen.

Die wasserhaltige mineralische Bindemittelzusammensetzung ist bevorzugt ein Frischmörtel mit einem Ausbreitmass von mindestens 170 mm, bevorzugt von 200 bis 380 mm, besonders bevorzugt von 250 bis 350 mm, bestimmt gemäss DIN EN 1015-3 nach dem Anheben des Setztrichters ohne Hübe des Ausbreittisches.

Weiters bevorzugt ist die wasserhaltige mineralische Bindemittelzusammensetzung ein Frischbeton mit einem Setzmass von mindestens 100 mm, bevorzugt 200 bis 295 mm, am meisten bevorzugt 250 bis 280 mm, bestimmt nach DIN EN 12350-2.

Wasserhaltige mineralische Bindemittelzusammensetzungen mit solcher Konsistenz lassen sich besonders gut pumpen und fördern, und sehr gut in dem kontinuierlichen Mischer mit dem wässrigen Beschleuniger vermischen.

Bevorzugt umfasst die wasserhaltige mineralische Bindemittelzusammensetzung folgende Bestandteile:
15-50 Gewichts-% Portlandzement,
40-65 Gewichts-% Füllstoffe,
0.01-5 Gewichts-% Additive und
8-25 Gewichts-% Wasser,
bezogen auf 100 Gewicht-% wasserhaltige mineralische Bindemittelzusammensetzung.

Weiterhin bevorzugt umfasst die wasserhaltige mineralische Bindemittelzusammensetzung folgende Bestandteile:
10-30 Gewichts-% Portlandzement,
5-20 Gewichts-% Calciumaluminatzement,
0-4 Gewichts-% Calciumsulfat, bevorzugt Calciumsulfat-Halbhydrat,
40-65 Gewichts-% Füllstoffe,
0.1-10 Gewichts-% Additive und
8-25 Gewichts-% Wasser,
bezogen auf 100 Gewicht-% wasserhaltige mineralische Bindemittelzusammensetzung.

Speziell bevorzugt umfasst die wasserhaltige mineralische Bindemittelzusammensetzung folgende Bestandteile:
20-40 Gewichts-% Portlandzement, insbesondere Portlandzement CEM I , 40-65 Gewichts-% Füllstoffe mit Partikelgrösse von maximal 2.2 mm, wobei bevorzugt mindestens 50 Gewicht-% der Füllstoffe eine Partikelgrösse von unter 0.5 mm aufweisen,
0-2 Gewichts-% Verflüssiger, insbesondere ein Polycarboxylatether,
0-8 Gewichts-% wasserunlösliches Polymer,
0-2 Gewichts-% Verdicker,
0-1 Gewichts-% Entschäumer,
0-5 Gewichts-% weitere Additive und
8-22 Gewichts-% Wasser,
bezogen auf 100 Gewicht-% wasserhaltige mineralische Bindemittelzusammensetzung.

Eine weitere speziell bevorzugte wasserhaltige mineralische Bindemittelzusammensetzung umfasst folgende Bestandteile:
15-28 Gewichts-% Portlandzement, insbesondere Portlandzement CEM I,
7-15 Gewichts-% Calciumaluminatzement oder Calciumsulfoaluminatzement
0-4 Gewichts-% Calciumsulfat-Halbhydrat,
40-65 Gewichts-% Füllstoffe mit Partikelgrösse von unter 2.2 mm, wobei bevorzugt mindestens 50 Gewicht-% der Füllstoffe eine Partikelgrösse von unter 0.5 mm aufweisen,
0.1-5 Gewichts-% Verzögerer umfassend insbesondere Weinsäure und/oder Zitronensäure und/oder deren Salze,
0-2 Gewichts-% Verflüssiger, insbesondere ein Polycarboxylatether,
0-2 Gewichts-% Verdicker,
0-1 Gewichts-% Entschäumer,
0-5 Gewichts-% weitere Additive und
8-24 Gewichts-% Wasser,
bezogen auf 100 Gewicht-% wasserhaltige mineralische Bindemittelzusammensetzung.

Die wasserhaltige mineralische Bindemittelzusammensetzung wird, bevorzugt mittels einer Pumpe und einer Förderleitung, insbesondere einem Schlauch, vom Ort der Bereitstellung zu dem kontinuierlichen Mischer zugeführt. Bevorzugt ist die wasserhaltige mineralische Bindemittelzusammensetzung gut förderbar. Eine gute Förderbarkeit ist für den 3D-Druck wichtig, weil sie Voraussetzung für eine homogene Applikation ist. Speziell für den Druck von grossen Formteilen kann die Länge einer Förderleitung zwischen Pumpe und kontinuierlichem Mischer bis zu 50 m und mehr erreichen, was zu hohem Druck in der Förderleitung führen kann. Ein hoher Druck, insbesondere in einem Schlauch, ist unvorteilhaft, weil das Material stark beansprucht wird und bei Überlastung bersten kann. Gut förderbare Zusammensetzungen können einen zu starken Druckaufbau verhindern.

Bevorzugt liegt der Druck in der Förderleitung zwischen Pumpe und kontinuierlichem Mischer unter 40 bar, mehr bevorzugt unter 25 bar.

Bevorzugt kann vor dem Zuführen der wasserhaltigen mineralischen Bindemittelzusammensetzung zu dem kontinuierlichen Mischer eine sogenannte "Schmiermischung" durch die Förderleitung und Druckeinrichtung gefördert werden. Die "Schmiermischung" wird nicht appliziert, sie wird typischerweise in einen Abfallbehälter entsorgt. Geeignete Schmiermischungen sind insbesondere wässrige Lösungen eines organischen Polymers, insbesondere SikaPump^{®} Start 1 oder eine dünnflüssige Mischung aus Wasser und Zement und/oder feinem Füllstoff, insbesondere Kalkstein. Bevorzugt wird zuerst eine wässrige Polymerlösung und anschliessend eine dünnflüssige Mischung aus Wasser und Zement und/oder feinem Füllstoff durch die Förderleitung und Druckeinrichtung gepumpt, bevor die wasserhaltige mineralische Bindemittelzusammensetzung gefördert wird.

Die wasserhaltige mineralische Bindemittelzusammensetzung wird mit einem wässrigen Beschleuniger vermischt. Der Beschleuniger ist vorteilhaft ein Erstarrungsbeschleuniger und/oder ein Erhärtungsbeschleuniger oder eine Mischung davon.

Als Beschleuniger können eine Vielzahl von dem Fachmann bekannten Substanzen eingesetzt werden.

Der wässrige Beschleuniger enthält mindestens eine Verbindung ausgewählt aus der Gruppe bestehend aus Aminoalkoholen, Alkali- und Erdalkalinitraten, Alkali- und Erdalkalinitriten, Alkali- und Erdalkalithiocyanaten, Alkali- und Erdalkalihalogeniden, Alkali- und Erdalkalicarbonaten, Glyzerin, Glyzerinderivaten, Glykolen, Glykolderivaten, Aluminiumsalzen, Aluminiumhydroxiden, Alkali- und Erdalkalihydroxiden, Alkali- und Erdalkalisilikaten, Alkali- und Erdalkalioxiden, Kristallisationskeimen, insbesondere CalciumSilikat-Hydrat-Verbindungen in feinteiliger Form, und Mischungen davon.

Besonders bevorzugt enthält der wässrige Beschleuniger ein Aluminiumsalz oder Aluminiumhydroxid, insbesondere Natriumaluminat, Kaliumaluminat, Aluminiumsulfat, Aluminiumhydroxysulfat, Aluminiumhydroxid oder Mischungen davon.

Solche Aluminium-Verbindungen beschleunigen das Abbinden eines hydraulischen Bindemittels speziell gut.

Bevorzugt können auch mehrere wässrige Beschleuniger, die sich in der Zusammensetzung unterscheiden, zusammen oder getrennt voneinander zugegeben werden.

Damit lässt sich beispielsweise eine flexible Anpassung an unterschiedlichste Anwendungen realisieren.

Die Dosierung des Beschleunigers hängt von der Zusammensetzung der wasserhaltigen mineralischen Bindemittelzusammensetzung, insbesondere von der Art und Menge des hydraulischen Bindemittels, der Art und Menge des Verzögerers, wenn vorhanden, und der Menge des Wassers sowie von der Umgebungstemperatur und der Temperatur der wasserhaltigen Bindemittelzusammensetzung ab.

Die Dosierung des Beschleunigers erfolgt bevorzugt in so einer Menge, dass die beschleunigte Zusammensetzung einige Sekunden bis einige Minuten gut formbar bleibt. Dadurch können die Schichten homogen aufgetragen werden, bilden einen guten Zusammenhalt und die Oberfläche des hergestellten Formkörpers, kann, sofern gewünscht, noch nachbehandelt, beispielsweise geglättet, werden.

Wird der Beschleuniger in unzureichender Menge dosiert, so erreicht die in Schichten applizierte beschleunigte Bindemittelzusammensetzung erst spät die notwendige Festigkeit damit eine weitere Schicht darauf aufgetragen werden kann. Dadurch muss die Druckgeschwindigkeit stark verringert werden oder es müssen Wartezeiten eingelegt werden, was die Fertigstellung des Formstücks verzögert.

Wird der Beschleuniger zu hoch dosiert, so kann es vorkommen dass die beschleunigte mineralische Bindemittelzusammensetzung bereits im Mischer, zumindest teilweise, erhärtet, was zu einem Blockieren des Mischers führen kann, oder das teilweise Erhärten erfolgt kurz nach dem Mischer vor oder während der Applikation, was dazu führen kann, dass die applizierte Schicht inhomogen und bröckelig und der Verbund mit einer später aufgetragenen Schicht mangelhaft ist.

Bevorzugt erfolgt das Vermischen der mineralischen Bindemittelzusammensetzung mit dem wässrigen Beschleuniger erst kurz vor der Applikation der beschleunigten mineralischen Bindemittelzusammensetzung.

Bevorzugt wird der wässrige Beschleuniger in einer Menge im Bereich von 0.3 bis 8 Gewichtsteilen, mehr bevorzugt 0.4 bis 5 Gewichtsteilen, noch mehr bevorzugt 0.5 bis 2.5 Gewichtsteilen, gerechnet als Feststoff ohne Wasser, bezogen auf 100 Gewichtsteile mineralisches Bindemittel, dosiert.

Neben dem Beschleuniger können noch weitere Additive mit dem kontinuierlichen Mischer mit der wasserhaltigen mineralischen Bindemittelzusammensetzung vermischt werden.

Der mindestens eine wässrige Beschleuniger und gegebenenfalls weitere Additive werden bevorzugt über Dosiereinrichtungen im Bereich des kontinuierlichen Mischers dosiert.

Die Förderung der wasserhaltigen mineralischen Bindemittelzusammensetzung und des wässrigen Beschleunigers und optional weiterer Additive zu dem Mischer kann beispielsweise über eine oder mehrere Fördereinrichtungen, insbesondere Pumpen und Förderleitungen, erfolgen. Die Fördereinrichtungen sind dabei insbesondere über eine Steuereinheit steuerbar, im Besonderen unabhängig voneinander.

Bevorzugt ist der kontinuierliche Mischer auf einem beweglichen Druckkopf, angebracht.

Bevorzugt weist der Druckkopf eine Austragsdüse für die schichtweise Applikation der beschleunigte mineralische Bindemittelzusammensetzung auf. Bevorzugt ist der kontinuierliche Mischer auf dem beweglichen Druckkopf unmittelbar bei dieser Austragsdüse angebracht. Dadurch lässt sich die zeitliche Festigkeitsentwicklung des mineralischen Bindemittels gezielt einstellen. Im Besonderen kann durch Zugabe eines Beschleunigers die Applikation insgesamt stark beschleunigt werden.

Bevorzugt sind die Dimension und das Gewicht des kontinuierlichen Mischers an die Grösse des Druckkopfes angepasst. So ist es vorteilhaft, wenn der Mischer in einer Druckeinrichtung für kleinere Formteile auch kleiner ist, als der Mischer in einer Druckeinrichtung für grosse Formteile wie Hausteile oder Mauern.

So kann der kontinuierliche Mischer ein Gewicht von 20 bis 100 kg oder mehr für den Druck von Formteilen in der Grössenordnung von mehreren Metern aufweisen, oder ein Gewicht von etwa 1 bis 20 kg für den Druck von Formteilen in der Grössenordnung von etwa 5 cm bis 1 m.

Mit dem kontinuierlichen Mischer wird der Beschleuniger sehr rasch, effizient und homogen in die mineralische Bindemittelzusammensetzung eingemischt. Dies ist wichtig, damit die Zusammensetzung beim schichtweisen Auftragen homogen ist und gleichmässig und rasch aushärtet.

In einer beispielhaften Ausführungsform umfasst der Mischer mehr als einen Einlass, insbesondere zwei, drei, vier, fünf, sechs, sieben, oder acht Einlasse.

Das Vorsehen von mehreren Einlässen bietet den Vorteil, dass dadurch insbesondere Bestandteile, welche miteinander reagieren oder zusammen nicht lagerstabil sind, durch separate Einlässe dem Mischbereich des Mischers zugeführt werden können.

Besonders geeignete Mischer werden in der internationalen Anmeldung mit der Anmeldenummer PCT/EP2017/054824 beschrieben.

Bevorzugt erfolgt das Vermischen der wasserhaltigen mineralischen Bindemittelzusammensetzung mit dem wässrigen Beschleuniger in dem Mischbereich bei einer Umdrehungszahl der Rührwelle von 500 bis 3000 Umdrehungen pro Minute, mehr bevorzugt von 650 bis 2500 Umdrehungen pro Minute, noch mehr bevorzugt von 800 bis 2000 Umdrehungen pro Minute, am meisten bevorzugt von 1000 bis 1500 Umdrehungen pro Minute.

Das Mischen bei hoher Drehzahl bewirkt ein rasches und effizientes Mischen, der Bindemittelzusammensetzung mit dem Beschleuniger, was speziell wichtig ist, weil ein schlecht verteilter Beschleuniger in der wässrigen mineralischen Bindemittelzusammensetzung sehr rasch punktuell zu sehr hohen Viskosität und/oder zum Erhärteten des Bindemittels führt, was zur Blockierung und/oder Beschädigung des Mischers führen kann. Wird der Beschleuniger hingegen sehr rasch und effizient mit der wässrigen mineralischen Bindemittelzusammensetzung vermischt, so erfolgt die Erhöhung der Viskosität und das Erhärten homogen und steuerbar, ohne Blockierung des Mischers und die beschleunigte mineralische Bindemittelzusammensetzung kann ohne Störungen appliziert werden.

Bevorzugt beträgt die Verweildauer der wasserhaltigen mineralischen Bindemittelzusammensetzung im Mischer weniger als 10 s, mehr bevorzugt weniger als 7 s, besonders bevorzugt weniger als 4 s.

Die mittlere Verweildauer der Bindemittelzusammensetzung in der Mischeinrichtung ist dabei die Zeitdauer, welche ein Partikel in der Mischeinrichtung, vom Einlass bis zum Auslass, durchschnittlich verweilt.

Der kontinuierliche Mischer, insbesondere in der bevorzugten Form, bewirkt eine sehr gute Verteilung des Beschleunigers in der Bindemittelzusammensetzung, was zu einem homogenen Aushärten der beschleunigten Bindemittelzusammensetzung führt, ohne Bildung von Klumpen oder schlechtem Verbund der Bestandteile.

Überraschenderweise kann die Verwendung des wässrigen Beschleunigers in Kombination mit dem Einsatz des kontinuierlichen Mischers die üblichen Schwankungen in der Zusammensetzung der wasserhaltigen mineralischen Bindemittelzusammensetzung, wie Schwankungen in Wassergehalt, in der Partikelgrössenverteilung der Füllstoffe oder in der Zementqualität, ausgleichen, womit die Eigenschaften der beschleunigten Bindemittelzusammensetzung sehr konstant sind und das Verfahren sehr robust wird, was äusserst vorteilhaft ist.

Die beschleunigte Bindemittelzusammensetzung ist unmittelbar nach dem Einmischen des Beschleunigers gut verformbar und kann mit dem Druckkopf in homogenen Schichten aufgetragen werden. Diese Schichten sind nach kurzer Zeit selbsttragend und zeigen eine rasche Festigkeitsentwicklung. Folgeschichten können daher in kurzen Abständen und in der Höhe von mehreren Zentimetern problemlos auf die darunterliegenden Schichten aufgetragen werden.

Die beschleunigte Bindemittelzusammensetzung wird bevorzugt über einen beweglichen Druckkopf appliziert.

Der Druckkopf verfügt insbesondere über wenigstens eine Austragsöffnung, welche identisch mit dem Auslass des kontinuierlichen Mischers sein kann, durch welche das aushärtbare Material ausgetragen werden kann.

Die gute Standfestigkeit der aufgetragenen Schichten erübrigt das Mitführen von Schalungsplatten an der Austragsöffnung des Druckkopfes.

Es kann jedoch bei speziellen Anwendungen von Vorteil sein, wenn Schalungsplatten direkt an der Austragsöffnung mitgeführt werden.

Bevorzugt befindet sich an der Austragsöffunung eine Austragsdüse, die das ausgetragene Material formt. Die Form ist nicht beschränkt, sollte aber an die maximale Partikelgrösse des auszutragenden Materials angepasst sein. Bevorzugt weist die Austragsdüse eine rechteckige, quadratische oder runde Form auf. In der Austragsdüse können noch weitere formgebende Elemente angebracht sein.

In einer bevorzugten Variante ist der Druckkopf in ein, zwei oder drei Raumrichtungen bewegbar. Besonders bevorzugt ist ein Druckkopf, welcher in drei Raumrichtungen bewegbar ist. Dadurch können in besonders einfacher Art und Weise nahezu beliebig geformte Formkörper hergestellt werden.

Die Bewegung des Druckkopfs kann insbesondere realisiert werden, indem der Druckkopf auf einen herkömmlichen Roboterarm montiert ist, welcher in ein, zwei oder drei Raumrichtungen bewegbar ist.

Bevorzugt befindet sich der Druckkopf auf einem 3-Achsen-Portalroboter-System. Dies ermöglicht den raschen Druck auch von grossen Formkörpern mit flexibler Formgebung.

Es ist auch möglich, Bewegungen in ein, zwei oder drei Raumrichtungen durch entsprechende Bewegungen des Bauraumbereichs zu realisieren. Der Bauraumbereich ist dabei derjenige Bereich, beispielsweise eine Fläche, auf welche der Formkörper aufgebaut wird.

Bevorzugt weist die beschleunigte mineralische Bindemittelzusammensetzung, wenn sie bei 21 °C bereitgestellt und appliziert wurde, 8 Stunden, mehr bevorzugt 4 Stunden, am meisten bevorzugt 1 Stunde, nach dem Mischen mit dem wässrigen Beschleuniger eine Druckfestigkeit von mindestens 10 MPa auf, wobei die Druckfestigkeit gemäss EN 196-1 bestimmt wird.

Mit dem erfindungsgemässen Verfahren können überraschend schnell Formkörper durch schichtweisen Auftrag erstellt werden.

Die Höhe einer einzelnen Schicht, typischerweise in einer Richtung im Wesentlichen senkrecht zu den durch einzelne Schichten gebildeten Ebenen gemessen, insbesondere in vertikaler Richtung, beträgt bevorzugt 1 mm bis 200 mm, mehr bevorzugt 5 mm bis 100 mm, insbesondere 10 mm bis 50 mm.

Die Gesamthöhe des Formkörpers oder die Dicke aller Einzelschichten des Formkörpers zusammengenommen beträgt bevorzugt 0.01 m bis 100 m oder mehr, mehr bevorzugt 0.1 m bis 80 m, noch mehr bevorzugt 0.3 m bis 30 m, insbesondere 0.5 m bis 10 m. Dies insbesondere falls die mineralische Bindemittelzusammensetzung eine Mörtel- oder Betonzusammensetzung umfasst oder daraus besteht.

Die Oberfläche des Formkörpers kann, solange sie noch bearbeitbar ist, mit geeigneten Werkzeugen geglättet, ausgebessert oder speziell verformt werden. Dies kann als Teil der maschinellen Fertigung erfolgen, oder manuell als separater Schritt. Die Oberfläche kann auch mit einer funktionellen oder dekorativen Beschichtung versehen werden, beispielsweise mit einer Farbe.

Der Formköper kann auch, solange er noch bearbeitbar ist, mit geeigneten Werkzeugen geschnitten werden. So können Löcher, insbesondere für Festeröffnungen, Türöffnungen, Leitungsdurchgänge oder auch Schnitte, insbesondere für spätere Bearbeitungsschritte, in den Formkörper eingebracht werden.

Der mit dem erfindungsgemässen Verfahren hergestellte Formkörper kann nahezu jede beliebige Form aufweisen. Der Formkörper ist beispielsweise ein Bauwerk, ein Fertigteil für ein Bauwerk, ein Bauelement, ein Mauerwerk, eine Brücke, eine Säule, ein Dekorationselement wie beispielsweise künstliche Berge, Riffe oder Skulpturen, ein Becken, ein Brunnen oder eine Wanne. Dabei kann der Formkörper eine Vollform oder eine Hohlform, mit oder ohne Boden, darstellen.

Der Formkörper kann direkt vor Ort erstellt und nach der Applikation nicht mehr bewegt werden. Der Formkörper kann aber auch an einem anderen Ort, insbesondere in einer Fabrik, erstellt werden. Dies erfolgt bevorzugt auf einer Unterlage, auf der er nicht haftet. Nach dem Aushärten kann der Formkörper an den gewünschten Ort transportiert werden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Verwendete Materialien

Sigunit^{®}-L53 AF (CC) ist ein wässriger alkalifreier Beschleuniger auf Basis von Aluminiumsulfat mit einem Feststoffgehalt von ca. 52 Gewichts-%, erhältlich bei Sika.

Betoflow^{®} D ist ein feines Calciumcarbonat-Pulver von 1-5 µm Partikelgrösse, erhältlich bei Omya.

Nekafill^{®} 15 ist ein Kalksteinmehl, erhältlich bei Kalkfabrik Netstal.

Sika^{®} ViscoCrete^{®}-3088 S ist ein wässriger Verzögerer/Fliessmittel auf Basis eines Polycarboxylatethers, erhältlich bei Sika.

Carbowet^{®} 4000 ist ein Entschäumer, erhältlich bei Air Products Chemicals Europe.

SikaPump^{®} ist ein Pumphilfsmittel, welches wasserlösliche Polymere enthält, erhältlich bei Sika.

### Beschreibung des Druckvorganges

Für den 3D-Druck wurde ein 3-Achsen-Portalroboter eingesetzt.

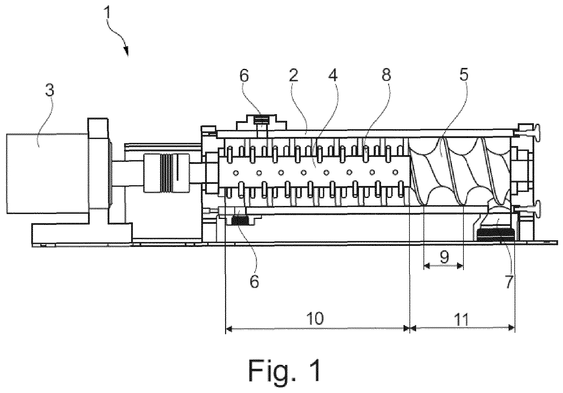

Der Portalroboter war mit einem Druckkopf ausgestattet, der in alle 3 Raumrichtungen bewegbar war. In den Druckkopf war ein dynamischer kontinuierlicher Mischer von etwa 60 kg Gewicht integriert. Der Mischer war wie in Fig. 1 gezeigt, aufgebaut. Er hatte einen Einlass für den Mörtel, einen Einlass für den wässrigen Beschleuniger und einen Auslass für den beschleunigten Mörtel. Die Trommel enthielt den Mischbereich und den Förderbereich und hatte einen Durchmesser von etwa 100 mm. Im Mischbereich war eine Rührwelle mit Stiften, und im Förderbereich eine Förderschnecke mit sechs Windungen, und die Rührwelle und die Förderschnecke waren auf der selben Achse angeordnet. Die Einlässe waren im Bereich der Rührwelle und der Auslass am Ende der Förderschnecke angebracht. Am Auslass war eine Runddüse mit einem Durchmesser von 40 mm angebracht.

Zur Bereitstellung des Frischmörtels wurde ein Zwangsmischer verwendet. Darin wurden zuerst die trockenen Bestandteile des Mörtels 1 Minute gemischt und anschliessend das Wasser und die wässrigen Bestandteile zugegeben und innerhalb von 3 Minuten gut gemischt.

Mit einer Schneckenpumpe wurde der Mörtel durch einen Schlauch mit einem Innendurchmesser von 35 mm und einer Gesamtlänge von 32 m zu dem ersten Einlass des Mischers gefördert.

Der wässrige Beschleuniger wurde aus einem Vorratsbehälter mit einer Pumpe durch einen Schlauch zu dem zweiten Einlass des Mischers gefördert.

In dem Mischer wurde die Mörtelmischung mit dem wässrigen Beschleuniger kontinuierlich vermischt und der beschleunigte Mörtel über den Auslass und die Düse des Druckkopfes in Schichten aufgetragen.

Die Förderung der Mörtelmischung, die Dosierung des Beschleunigers, die Rotationsgeschwindigkeit des kontinuierlichen Mischers und die Bewegung des Druckkopfes wurden über ein Computerprogramm gesteuert.

Vor der ersten Mörtelmischung wurde eine Mischung aus 1 Beutel SikaPump^{®} Start 1 und 30 I Wasser und anschliessend eine Mischung aus 15 kg Nekafill^{®} 15 und 15 kg Wasser durch die Druckeinrichtung, das heisst, durch den Schlauch, den Mischer und den Druckkopf, in eine Abfallmulde gepumpt.

Die Temperatur der wasserhaltigen Mörtelmischung betrug etwa 19°C, die der Umgebungsluft etwa 21 °C.

### Beispiel 1

Ein Frischmörtel aus 120 kg Portlandzement CEM I 52.5, 92 kg Quarzsand von 0-1 mm mit einer Feuchte von 2.2 Gewichts-%, 33 kg Betoflow^{®}-D, 80 kg Nekafill^{®} 15, 1.1 kg Sika^{®} Viscocrete^{®}-3088 S, 0.004 kg Carbowet^{®} 4000 und 56.8 kg Wasser wurde zubereitet.

Der Frischmörtel hatte ein Ausbreitmass von 260 mm, gemessen gemäss DIN EN 1015-3 nach dem Anheben des Setztrichters ohne Hübe des Ausbreittisches.

Mit einer Förderrate von etwa 33 kg/min wurde der Frischmörtel zum kontinuierlichen Mischer gefördert.

Mit einer Förderrate von etwa 350-400 ml/min wurde als Beschleuniger vorverdünntes Sigunit^{®}-L53 AF (CC) (75 Gewichts-% Sigunit^{®}-L53 AF (CC) und 25 Gewichts-% Wasser) zum kontinuierlichen Mischer gefördert.

Der Frischmörtel und der Beschleuniger wurden in dem Mischer kontinuierlich bei etwa 1200 Umdrehungen der Rührwelle pro Minute, gemischt. Die beschleunigte Mörtelmischung wurde mit dem Druckkopf auf eine Plastikfolie, die auf einem Betonboden ausgelegt war, in Schichten von etwa 50 mm Breite und 10 mm Höhe aufgetragen. Die Geschwindigkeit des Druckkopfes betrug dabei 20-30 Meter pro Minute. In mehreren Schichten wurde ein konischer, länglicher, geschwungener Hohlrahmen in Form einer unten offenen Badewanne von etwa 800 mm Höhe gedruckt. Die Längsseiten waren parallel, die Breitseiten abgerundet und die Steigung der Wände an den Breitseiten betrug etwa 30°. Der fertige Formkörper wies eine untere und obere Breite von etwa 590 mm, eine untere Länge von etwa 720 mm und eine obere Länge von etwa 1670 mm auf. Der Druck des Formkörpers benötigte etwa 15 Minuten. Die Höhe der unteren Schichten und der oberen Schichten unterschieden sich nicht mehr als 5%. Der gedruckte Formkörper wies eine wellenförmige, sehr einheitliche Oberfläche ohne sichtbare Fehlstellen auf.

Während des ganzen Druckvorganges war der Druck in dem Schlauch zur Förderung des Frischmörtels im Bereich von 3-5 bar.

Etwa 16 Stunden nach dem Auftragen der letzten Schicht wurde der Hohlkörper mit Hilfe von Tragriemen und einem Kran auf eine Transportpalette gehoben, ohne dass Schäden an dem gedruckten Formkörper entstanden. Nach etwa vier Tagen wurde der Formkörper mit Hilfe eines schweren Hammers zerstört und die Bruchstücke optisch analysiert. Die Bruchflächen wiesen eine einheitliche Oberfläche, ohne Lufteinschlüsse oder Fehlstellen auf. Die Bruchflächen zeigten keine bevorzugte Orientierung, das heisst, die aufgetragenen Schichten wiesen einen gleich guten Verbund untereinander wie innerhalb der gleichen Schicht auf.

### Vergleichsbeispiel 1

Beispiel 1 wurde wiederholt, allerdings ohne Zugabe eines Beschleunigers. Der Mörtel floss aus der Austragsdüse und konnte nicht in Schichten aufgetragen werden. Der Versuch wurde daraufhin abgebrochen.

### Vergleichsbeispiel 2

Beispiel 1 wurde wiederholt, allerdings ohne Verwendung eines Mischers zum Vermischen des Beschleunigers mit der Mörtelmischung. Die Dosierleitung für den Beschleuniger wurde so montiert, dass der Beschleuniger kurz vor der Austragsdüse in der Mitte des Schlauches, in dem der Mörtel gefördert wurde, dosiert wurde. Die Beschleunigerdosierung war gleich wie in Beispiel 1. Der Mörtel, der aus der Austragsdüse ausgetragen wurde, war sehr inhomogen. Ein Aufbau von mehreren übereinanderliegenden Schichten war mit diesem Mörtel nicht möglich.

### Vergleichsbeispiel 3

Beispiel 1 wurde wiederholt, allerdings wurde der wässrige Beschleuniger direkt nach der Bereitstellung der wässrigen Mörtelmischung zu dieser zugegeben und eingemischt. Nach wenigen Sekunden steifte der Mörtel an, ein Fördern zum Druckkopf war nicht mehr möglich.

### Kurze Beschreibung der Zeichnungen

Im Folgenden werden anhand der Zeichnung Ausführungsbeispiele der Erfindung näher erläutert.

Fig. 1 zeigt: schematische Darstellung eines beispielhaften Mischers.

Es sind nur die für das unmittelbare Verständnis der Erfindung wesentlichen Elemente gezeigt.

In Fig. 1 ist ein beispielhafter Mischer 1 dargestellt. Der Mischer 1 hat einen Antrieb 3 und eine Trommel 2 mit einem Mischbereich 10 und einem Förderbereich 11. In dem Mischbereich befindet sich eine Rührwelle 4 und zwei Einlässe 6, im Förderbereich 11 befindet sich eine Fördervorrichtung 5 und ein Auslass 7.

Dabei ist die Fördervorrichtung 5 direkt an der Rührwelle 4 anschliessend angeordnet, sodass die durch die Rührwelle 4 gemischte beschleunigte mineralische Bindemittelzusammensetzung direkt von der Fördervorrichtung 5 erfassbar und durch den Auslass 7 aus der Trommel 2 förderbar ist.

Die Fördervorrichtung 5 ist in dieser Darstellung als Förderschnecke ausgebildet. Die Förderschnecke in dieser Darstellung hat zwei vollständige Windungen 9. Je nach gewünschter Förderleistung kann die Förderschnecke anders dimensioniert bzw. ausgebildet werden. Die Fördervorrichtung 5 und die Rührwelle 4 sind auf einer selben Achse in der Trommel 2 angeordnet. In dieser Darstellung ist die Rührwelle 4 mit Stiften 8 bestückt, so dass bei einer Rotation der Rührwelle die wasserhaltige Bindemittelzusammensetzung in der Trommel von den Stiften 8 bewegt wird.

In dieser Darstellung sind zwei Einlässe 6 an der Trommel 2 angeordnet.

Solche Mischer sind speziell gut geeignet, den wässrigen Beschleuniger mit der wasserhaltigen mineralischen Bindemittelzusammensetzung homogen und rasch zu mischen.

Bevorzugt ist ein Mischer 1 der zusätzlich einen Antrieb 3 umfasst, und dass das dynamische Mischelement eine Rührwelle 4 mit Rührelementen 8, zum Mischen der wasserhaltigen mineralischen Bindemittelzusammensetzung mit dem wässrigen Beschleuniger, umfasst, wobei der Mischbereich 10 und der Förderbereich 11 in einer selben Trommel 2 angeordnet sind.

Bevorzugt sind die Rührwelle 4 und die Fördervorrichtung 5 auf einer selben Achse angeordnet, wobei die Fördervorrichtung 5 insbesondere eine Förderschnecke umfasst.

## Patentansprüche

1. Verfahren zur Applikation einer mineralischen Bindemittelzusammensetzung mittels 3D-Druck, umfassend die Schritte
- Bereitstellen einer wasserhaltigen mineralischen Bindemittelzusammensetzung,
- Zuführen der wasserhaltigen mineralischen Bindemittelzusammensetzung, insbesondere mittels einer Pumpe, zu einem kontinuierlichen Mischer (1) umfassend
• einen Mischbereich (10) mit mindestens einem dynamischen Mischelement und mindestens einem Einlass (6),
• einen mit dem Mischbereich (10) verbundenen Förderbereich (11) mit mindestens einer Fördervorrichtung (5) und einem Auslass (7),
wobei die wasserhaltige mineralische Bindemittelzusammensetzung durch den mindestens einen Einlass (6) in den Mischbereich (10) gefördert wird,
- Zuführen von mindestens einem wässrigen Beschleuniger für das Abbinden der wasserhaltigen mineralischen Bindemittelzusammensetzung in den Mischbereich (10) des kontinuierlichen Mischers (1),
- Vermischen des mindestens einen wässrigen Beschleunigers mit der wasserhaltigen Bindemittelzusammensetzung im Mischbereich (10) des kontinuierlichen Mischers (1) zu einer beschleunigten Bindemittelzusammensetzung,
- Fördern der beschleunigten Bindemittelzusammensetzung mittels der Fördervorrichtung (5) zum Auslass (7), und
- schichtweises Applizieren der beschleunigten Bindemittelzusammensetzung, insbesondere über einen beweglichen Druckkopf,
wobei der wässrige Beschleuniger mindestens eine Verbindung ausgewählt aus der Gruppe bestehend aus Aminoalkoholen, Alkali- und Erdalkalinitraten, Alkali- und Erdalkalinitriten, Alkali- und Erdalkalithiocyanaten, Alkali- und Erdalkalihalogeniden, Alkali- und Erdalkalikarbonaten, Glyzerin, Glyzerinderivaten, Glykolen, Glykolderivaten, Aluminiumsalzen, Aluminiumhydroxiden, Alkali- und Erdalkalihydroxiden, Alkali- und Erdalkalisilikaten, Alkali- und Erdalkalioxiden, Kristallisationskeimen, insbesondere CalciumSilikat-Hydrat-Verbindungen in feinteiliger Form, und Mischungen davon enthält

2. Verfahren gemäss Anspruch 1, **dadurch gekennzeichnet, dass** die wasserhaltige mineralische Bindemittelzusammensetzung mindestens ein hydraulisches Bindemittel, bevorzugt ein zementöses Bindemittel, umfasst.

3. Verfahren gemäss Anspruch 2, **dadurch gekennzeichnet, dass** das hydraulische Bindemittel ausgewählt ist aus der Gruppe bestehend aus Portlandzement, Calciumaluminatzement, Calciumsulfoaluminatzement und Mischungen davon.

4. Verfahren gemäss einem der vorhergehenden Ansprüche, **dadurch gekennzeichnet, dass** die mineralische Bindemittelzusammensetzung Füllstoffe enthält, von denen mindestens 30 Gewichts-%, bevorzugt mindestens 40 Gewichts-%, am meisten bevorzugt mindestens 50 Gewichts-%, kleiner als 2 mm, bevorzugt kleiner als 1 mm, mehr bevorzugt kleiner als 0.5 mm, sind, bezogen auf eine Gesamtmenge von 100 Gewichts-% aller Füllstoffe in der Bindemittelzusammensetzung.

5. Verfahren gemäss einem der vorhergehenden Ansprüche, **dadurch gekennzeichnet, dass** die wasserhaltige mineralische Bindemittelzusammensetzung ein Frischmörtel mit einem Ausbreitmass von mindestens 170 mm, bevorzugt von 200 bis 380 mm, besonders bevorzugt von 250 bis 350 mm, bestimmt gemäss DIN EN 1015-3 nach dem Anheben des Setztrichters ohne Hübe des Ausbreittisches, ist.

6. Verfahren gemäss einem der vorhergehenden Ansprüche, **dadurch gekennzeichnet, dass** der wässrige Beschleuniger ein Aluminiumsalz oder Aluminiumhydroxid, insbesondere Natriumaluminat, Kaliumaluminat, Aluminiumsulfat, Aluminiumhydroxysulfat, Aluminiumhydroxid oder Mischungen davon, enthält.

7. Verfahren gemäss einem der vorhergehenden Ansprüche, **dadurch gekennzeichnet, dass** der wässrige Beschleuniger in einer Menge im Bereich von 0.3 bis 8 Gewichtsteilen, bevorzugt 0.4 bis 5 Gewichtsteilen, mehr bevorzugt 0.5 bis 2.5 Gewichtsteilen, gerechnet als Feststoff ohne Wasser bezogen auf 100 Gewichtsteile mineralisches Bindemittel, dosiert wird.

8. Verfahren gemäss einem der vorhergehenden Ansprüche, **dadurch gekennzeichnet, dass** der kontinuierliche Mischer auf einem beweglichen Druckkopf angebracht ist.

9. Verfahren gemäss einem der vorhergehenden Ansprüche, **dadurch gekennzeichnet, dass** der Mischer (1) zusätzlich einen Antrieb (3) umfasst, und dass das dynamische Mischelement eine Rührwelle (4) mit Rührelementen (8), zum Mischen der wasserhaltigen mineralischen Bindemittelzusammensetzung mit dem wässrigen Beschleuniger, umfasst, wobei der Mischbereich (10) und der Förderbereich (11) in einer selben Trommel (2) angeordnet sind.

10. Verfahren gemäss Anspruch 9, **dadurch gekennzeichnet, dass** die Rührwelle (4) und die Fördervorrichtung (5) auf einer selben Achse angeordnet sind, wobei die Fördervorrichtung (5) insbesondere eine Förderschnecke umfasst.

11. Verfahren gemäss einem der vorhergehenden Ansprüche, **dadurch gekennzeichnet, dass** das Vermischen der wasserhaltigen mineralischen Bindemittelzusammensetzung mit dem wässrigen Beschleuniger in dem Mischbereich bei einer Umdrehungszahl der Rührwelle von 500 bis 3000 Umdrehungen pro Minute, bevorzugt von 650 bis 2500 Umdrehungen pro Minute, noch mehr bevorzugt von 800 bis 2000 Umdrehungen pro Minute, am meisten bevorzugt von 1000 bis 1500 Umdrehungen pro Minute, erfolgt.

## Claims

1. Method for applying a mineral binder composition by 3D printing, comprising the steps of
- providing a hydrous mineral binder composition,
- feeding the hydrous mineral binder composition, especially by a pump, to a continuous mixer (1) comprising
• a mixing region (10) comprising at least one dynamic mixing element and at least one inlet (6),
• a conveying region (11) connected to the mixing region (10) and comprising at least one conveying device (5) and an outlet (7),
the hydrous mineral binder composition being conveyed through the at least one inlet (6) into the mixing region (10),
- feeding at least one aqueous accelerator for the setting of the hydrous mineral binder composition into the mixing region (10) of the continuous mixer (1),
- mixing the at least one aqueous accelerator with the hydrous binder composition in the mixing region (10) of the continuous mixer (1) to give an accelerated binder composition,
- conveying the accelerated binder composition by the conveying device (5) to the outlet (7), and
- applying the accelerated binder composition layer by layer, in particular by way of a movable printing head, where the aqueous accelerator comprises at least one compound selected from the group consisting of amino alcohols, alkali metal and alkaline earth metal nitrates, alkali metal and alkaline earth metal nitrites, alkali metal and alkaline earth metal thiocyanates, alkali metal and alkaline earth metal halides, alkali metal and alkaline earth metal carbonates, glycerol, glycerol derivatives, glycols, glycol derivatives, aluminium salts, aluminium hydroxides, alkali metal and alkaline earth metal hydroxides, alkali metal and alkaline earth metal silicates, alkali metal and alkaline earth metal oxides, crystallization nuclei, especially calcium silicate hydrate compounds in finely divided form, and mixtures thereof.

2. Method according to Claim 1, **characterized in that** the hydrous mineral binder composition comprises at least one hydraulic binder, preferably a cementitious binder.

3. Method according to Claim 2, **characterized in that** the hydraulic binder is selected from the group consisting of Portland cement, calcium aluminate cement, calcium sulfoaluminate cement, and mixtures thereof.

4. Method according to any of the preceding claims, **characterized in that** the mineral binder composition comprises fillers of which at least 30 wt%, preferably at least 40 wt%, most preferably at least 50 wt% are smaller than 2 mm, preferably smaller than 1 mm, more preferably smaller than 0.5 mm, based on a total amount of 100 wt% of all fillers in the binder composition.

5. Method according to any of the preceding claims, **characterized in that** the hydrous mineral binder composition is a fresh mortar having a slump of at least 170 mm, preferably of 200 to 380 mm, more preferably of 250 to 350 mm, determined according to DIN EN 1015-3 after the raising of the slump cone without lifts of the flow table.

6. Method according to any of the preceding claims, **characterized in that** the aqueous accelerator comprises an aluminium salt or aluminium hydroxide, especially sodium aluminate, potassium aluminate, aluminium sulfate, aluminium hydroxysulfate, aluminium hydroxide, or mixtures thereof.

7. Method according to any of the preceding claims, **characterized in that** the aqueous accelerator is metered in an amount in the range from 0.3 to 8 parts by weight, preferably 0.4 to 5 parts by weight, more preferably 0.5 to 2.5 parts by weight, calculated as solid without water, based on 100 parts by weight of mineral binder.

8. Method according to any of the preceding claims, **characterized in that** the continuous mixer is mounted on a movable printing head.

9. Method according to any of the preceding claims, **characterized in that** the mixer (1) additionally comprises a drive (3), and **in that** the dynamic mixing element comprises a stirring shaft (4) having stirring elements (8), for mixing the hydrous mineral binder composition with the aqueous accelerator, the mixing region (10) and the conveying region (11) being arranged in one and the same drum (2).

10. Method according to Claim 9, **characterized in that** the stirring shaft (4) and the conveying device (5) are arranged on one and the same axis, the conveying device (5) more particularly comprising a screw conveyor.

11. Method according to any of the preceding claims, **characterized in that** the hydrous mineral binder composition is mixed with the aqueous accelerator in the mixing region at a stirring shaft speed of 500 to 3000 revolutions per minute, preferably of 650 to 2500 revolutions per minute, more preferably still of 800 to 2000 revolutions per minute, most preferably of 1000 to 1500 revolutions per minute.

## Revendications

1. Procédé d'application d'une composition de liant minéral par impression 3D, comprenant les étapes suivantes :
- la fourniture d'une composition de liant minéral contenant de l'eau,
- l'amenée de la composition de liant minéral contenant de l'eau, notamment au moyen d'une pompe, à un mélangeur continu (1) comprenant
- une zone de mélange (10) avec au moins un élément de mélange dynamique et au moins une entrée (6),
- une zone d'acheminement (11) reliée à la zone de mélange (10) avec au moins un dispositif d'acheminement (5) et une sortie (7),
la composition de liant minéral contenant de l'eau étant acheminée dans la zone de mélange (10) à travers l'au moins une entrée (6),
- l'amenée d'au moins un accélérateur aqueux pour la prise de la composition de liant minéral contenant de l'eau dans la zone de mélange (10) du mélangeur continu (1),
- le mélange de l'au moins un accélérateur aqueux avec la composition de liant contenant de l'eau dans la zone de mélange (10) du mélangeur continu (1) pour former une composition de liant accélérée,
- l'acheminement de la composition de liant accélérée vers la sortie (7) au moyen du dispositif d'acheminement (5), et
- l'application en couches de la composition de liant accélérée, notamment par le biais d'une tête d'impression mobile, l'accélérateur aqueux contenant au moins un composé choisi dans le groupe constitué par les aminoalcools, les nitrates alcalins et alcalino-terreux, les nitrites alcalins et alcalino-terreux, les thiocyanates alcalins et alcalino-terreux, les halogénures alcalins et alcalino-terreux, les carbonates alcalins et alcalino-terreux, la glycérine, les dérivés de glycérine, les glycols, les dérivés de glycol, les sels d'aluminium, les hydroxydes d'aluminium, les hydroxydes alcalins et alcalino-terreux, les silicates alcalins et alcalino-terreux, les oxydes alcalins et alcalino-terreux, les germes de cristallisation, notamment les composés de silicate de calcium hydraté sous forme finement divisée, et des mélanges de ceux-ci.

2. Procédé selon la revendication 1, **caractérisé en ce que** la composition de liant minéral contenant de l'eau comprend au moins un liant hydraulique, de préférence un liant cimentaire.

3. Procédé selon la revendication 2, **caractérisé en ce que** le liant hydraulique est choisi dans le groupe constitué par le ciment Portland, le ciment d'aluminate de calcium, le ciment de sulfoaluminate de calcium et des mélanges de ceux-ci.

4. Procédé selon l'une quelconque des revendications précédentes, **caractérisé en ce que** la composition de liant minéral contient des charges, dont au moins 30 % en poids, de préférence au moins 40 % en poids, de manière préférée entre toutes au moins 50 % en poids, sont inférieures à 2 mm, de préférence inférieures à 1 mm, de manière davantage préférée inférieures à 0,5 mm, par rapport à une quantité totale de 100 % en poids de toutes les charges dans la composition de liant.

5. Procédé selon l'une quelconque des revendications précédentes, **caractérisé en ce que** la composition de liant minéral contenant de l'eau est un mortier frais ayant une mesure d'étalement d'au moins 170 mm, de préférence de 200 à 380 mm, de manière particulièrement préférée de 250 à 350 mm, déterminée selon la norme DIN EN 1015-3 après le soulèvement de la trémie sans levage de la table d'étalement.

6. Procédé selon l'une quelconque des revendications précédentes, **caractérisé en ce que** l'accélérateur aqueux contient un sel d'aluminium ou de l'hydroxyde d'aluminium, notamment de l'aluminate de sodium, de l'aluminate de potassium, du sulfate d'aluminium, de l'hydroxysulfate d'aluminium, de l'hydroxyde d'aluminium ou des mélanges de ceux-ci.

7. Procédé selon l'une quelconque des revendications précédentes, **caractérisé en ce que** l'accélérateur aqueux est dosé en une quantité dans la plage allant de 0,3 à 8 parties en poids, de préférence 0,4 à 5 parties en poids, de manière davantage préférée 0,5 à 2,5 parties en poids, calculée en tant que matière solide sans eau par rapport à 100 parties en poids de liant minéral.

8. Procédé selon l'une quelconque des revendications précédentes, **caractérisé en ce que** le mélangeur continu est monté sur une tête d'impression mobile.

9. Procédé selon l'une quelconque des revendications précédentes, **caractérisé en ce que** le mélangeur (1) comprend en outre un entraînement (3), et **en ce que** l'élément de mélange dynamique comprend un arbre d'agitation (4) avec des éléments d'agitation (8), pour le mélange de la composition de liant minéral contenant de l'eau avec l'accélérateur aqueux, la zone de mélange (10) et la zone d'acheminement (11) étant agencées dans un même tambour (2).

10. Procédé selon la revendication 9, **caractérisé en ce que** l'arbre d'agitation (4) et le dispositif d'acheminement (5) sont agencés sur un même axe, le dispositif d'acheminement (5) comprenant notamment une vis d'acheminement.

11. Procédé selon l'une quelconque des revendications précédentes, **caractérisé en ce que** le mélange de la composition de liant minéral contenant de l'eau avec l'accélérateur aqueux est effectué dans la zone de mélange à une vitesse de rotation de l'arbre d'agitation de 500 à 3 000 tours par minute, de préférence de 650 à 2 500 tours par minute, de manière encore davantage préférée de 800 à 2 000 tours par minute, de manière préférée entre toutes de 1 000 à 1 500 tours par minute.
